# EUROPEAN PATENT APPLICATION

(11) **EP 4 826 429 A1**
(43) Date of publication of application: **21.10.2026**
(21) Application number: 25171346.7
(22) Date of filing: 17.04.2025
(51) Int. Cl.: G02B 21/06

(54) **DEVICES AND SYSTEMS FOR ILLUMINATION FOR A MICROSCOPE AND MICROSCOPE**

(71) Applicant: Leica Instruments (Singapore) Pte Ltd., Singapore 618299 (SG)
(72) Inventor: WEIGER, Ulrich, 618299 Singapore (SG)
(74) Representative: Paustian & Partner Patentanwälte mbB

(57) **Abstract**

A first aspect of the present disclosure is related to a device for illumination for a microscope,
comprising:
- a first illumination means, IM1, transmitting a first light beam, LB1;
- a second illumination means, IM2, transmitting a second light beam, LB2; wherein IM1 and IM2 are fixed in relation to each other such that LB1 is transmitted non-parallelly to LB2; and - a first mirror , configured to re-direct LB1 or LB2 such that it comprises a section that is essentially parallel to the respective other light beam.

## Description

### Technical Field

This disclosure is related to devices and systems for illumination of samples for microscopes and microscope comprising such devices.

### Background

In modern surgical operation microscopes, in addition to the typical white light illumination, excitation is employed for fluorescence-guided applications. This enables visibility of specific tissues or markers that have been labeled with fluorescent dyes. One commonly used approach involves filtering the output from a broadband light source, such as a xenon lamp, through a carefully selected band-pass filter. By narrowing the illumination spectrum, the microscope can selectively excite fluorescence in targeted materials, allowing surgeons to distinguish critical structures with greater clarity and precision. Further improvements are desirable.

### Summary

An object of the present disclosure is to improve an illumination for microscopes.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a device for illumination for a microscope,
*comprising:*
- *a first illumination means, IM1, transmitting a first light beam, LB1;*
- *a second illumination means, IM2, transmitting a second light beam, LB2;*
*wherein IM1 and IM2 are fixed in relation to each other such that LB1 is transmitted non-parallelly to LB2; and* - a *first mirror, configured to re-direct LB1 or LB2 such that it comprises a section that is essentially parallel to the respective other light beam.*

A device for illumination for a microscope can be any device suitable for illumination a problem or sample. In particular an illumination device can be configured to provide a pre-defined illumination for/of a probe/sample, wherein a pre-defined parameter can be brightness, frequency, and/or time related characteristics. An illumination device may be a scalable device. An illumination device for a microscope sample may, e.g. be an LED and/or a system of LEDs. An illumination device may also be a fiber optic illuminator, which uses a flexible light guide that can be positioned to direct light at various angles or to a place near the sample/probe. Traditional incandescent or halogen lamps can also be employed. An illumination device may comprise a lamp, such as a xenon lamp. The device for illumination may comprise a mechanical frame. The mechanical frame can comprise an exoskeleton as a mechanical structure. An exoskeleton may provide a space withing the device for illumination which can comprise one or more functions of the device for illumination. Additionally or alternatively, the mechanical frame may comprise a skeleton. The device for illumination can, e.g., have a cubicle-like structure, wherein the cubicle is defined by an exoskeleton frame. Alternatively, the device for illuminating can have a round sphere-like structure. A device for illumination may have a frame of an imaging device, e.g. a microscope frame, as a mechanical structure.

A device for illumination may comprise a plurality of illumination means. Each illumination means may be related to a specifically configured light. The specific configuration may be related to brightness/intensity, spectrum and/or time of light provision. Each illumination means is configured to cast its light essentially along a beam direction. The different illumination means may be arranged, at least temporality, such that their beam directions are non-parallel relative to each other, in particular not necessarily parallel relative to each other. Beams of different illumination means may be arranged to each other in an angle, such as an obtuse angle, an acute angle, and/or a essentially in a right angle. Therefore, the illumination means may be attached to a frame of the device for illumination. By arranging the illumination means at least partly non-parallelly, i.e. in different angles, relative to each other a compact device for illumination can be obtained. In this way an illumination means can in particular be adapted to match a structure of a housing of a microscope or another part of the environment.

A device for illumination may comprise a control system, such as a processor, configured to control the light provision of the different illumination means. Additionally or alternatively, the illumination device may comprise one or more interfaces to communicate with a remote control system, e.g. a control system of a PC or a network-based computing device.

A mirror may be arranged at or within the frame of the illumination device. For example, in case the illumination device comprises an exoskeleton-like frame structure, a mirror can be arranged withing the space provided by the exoskeleton-like frame. The mirror is configured such that at least one of the first light beam and the second light beam of first and the second illumination device may be redirected such that the two light beams are essentially parallel. For example, the mirror can be arranged such that the first light beam (from the first illumination device) is redirected to essentially match the direction of the second light beam (of the second illumination device). Alternatively, the first mirror can be arranged to change the direction of the first light beam and a second mirror (or a second part of the first mirror) can be arranged to change the direction of the second light beam. The directions of both light beams are changed such that both light beams are essentially parallel. The illumination device may be designed dichroitic in that way, that it combines ray paths with different spectra into one common path.

The illumination means and/or the mirrors may be mounted on a frame, which could be a skeleton like structure or an exoskeleton-like structure. For example the device can comprise a rectangular frame structure, which can take illumination means on each side and one or more mirrors within the volume defined by the rectangular frame structure.

By providing an illumination device with a plurality of illumination means whose light beams are parallelized by at least one mirror, a sample of a microscope can be illuminated effectively, and a compact illumination device can be provided.

An embodiment of the first aspect is related to a device for illumination for a microscope,
*comprising:*
- *a third illumination means, IM3, transmitting a third light beam, LB3, wherein IM1 , IM2 , IM3 are fixed in relation to each other such that LB3 is transmitted non-parallel to LB1 or LB2; and*
- *a second mirror , configured to re-direct LB3 such that it comprises a section that is essentially parallel to LB1 or LB2.*

A third illumination means can be of the same principle structure as the first and/or the second illumination means. Since the third light beam provided by the third illumination means is neither parallel to the first light beam (of the first illumination means) nor parallel to the second light beam (of the second illumination means), it needs to be redirected at least by one direction change in order to become parallel to both of the other light beams. Therefore, a second mirror is used. The second mirror can be a part of the first mirror, which may have a different re-direction angle than the part which redirects the first or the second light beam.

An illumination device with three illumination means that are arranged such they cast non-parallel light beams which are later parallelized by mirrors enables a compact illumination device with multiple beams for a complex illumination of a microscope probe/sample.

An embodiment of the first aspect is related to a device for illumination for a microscope,
*wherein one or more of the illumination means comprise one or more of:*
- *LEDs and;*
- *laser diodes.*

Light-emitting diodes (LEDs) can provide bright, uniform, and stable illumination. LEDs can provide white light or light constraint to a specific spectrum. Further, LEDs are energy efficient and dissipate only little energy (as heat) during operation.

A laser diode is a semiconductor device that converts electrical energy into a coherent beam of light. Unlike LEDs, which produce light through spontaneous emission, laser diodes harness stimulated emission to generate highly focused, monochromatic, and directionally coherent light. A laser diode can comprise a precisely configurable light beam with respect to intensity and spectral distribution of the emitted light.

An embodiment of the first aspect is related to a device for illumination for a microscope,
*wherein one or more illumination means provide a light beam with light in a pre-defined spectral distribution, in particular for a fluorescence excitation.*

A pre-defined spectral distribution can be achieved by tailoring the emission characteristics of the light source within an illumination means and/or using external optical components. For LEDs, the semiconductor's material composition, doping, and device structure determine the primary emission peak; additional layers (like phosphors or quantum dots) can shift or broaden the spectrum. In laser diodes, external cavity elements (such as diffraction gratings or volume Bragg gratings) can refine or tune an emitted wavelength. Additionally or alternatively multiple individual LEDs or lasers at different wavelengths may be combined to create a pre-defined spectral distribution.

Additionally, optical filters or dichroic mirrors can further shape the light to the desired spectral distribution. In particular the first mirror and the second mirror, which are configured to redirect two of the light beams in order to provide a parallelized light beam may further adapted to curb a spectral distribution of the light beam which it is configured to redirect. This can be done by configuring the mirrors as such, e.g. by a special coating. Additionally or alternatively, further filters may be mounted on top of a mirror in order to achieve the spectral effect.

An embodiment of the first aspect is related to a device for illumination for a microscope,
*configured to:*
- *mechanically connect to a second illumination device, in particular an illumination device according to one of the preceding aspects, such that light beams of the device and of the second device and*/*or the third device are guided in a pre-defined direction, in particular towards one or more of:*
   - *an aspherical lens ;*
   - *a fiber optic cable;*
   - a *lens system, in particular an objective lens or a zoom lens.*

The second device also provides one or more parallelized light beams. If the second illumination device is a device according to the first aspect, it can have one or multiple mirrors in order to redirect the beams of its illumination means to a single output beam.

The illumination means can have a further mirror to redirect the (parallelized) output beam to another direction, in particular to the same direction as its own output beam, thereby providing a compound beam comprising light beams from its own illumination means and light beams from illumination means of a mechanically connected illumination device. The output beam can be directed towards an aspherical lens in order to be further provided to the sample. Additionally or alternatively, the output beam may be provided to a fiber optic cable, in order to provide the output beam to a place in the microscope from where it is finally cast to a probe/sample. Thereby, a compact system of illumination devices can be configured.

An embodiment of the first aspect is related to a device for illumination for a microscope,
*comprising:*
- *an aspherical lens .*

An aspherical lens has a non-spherical curvature. The curvature may be specifically calculated to direct all incoming rays to the same focal point. This may improve the overall uniformity and efficiency of the illumination. The parallelized output beam of the illumination device may be directed via an aspherical lens towards a probe/sample. Furthermore, an aspherical lens of the illumination device may be arranged such that output beams of one or more other illumination devices, which are connected to the illumination device of the aspherical lens, are also guided over the aspherical lens and thereby a single output light beam can be directed to a probe/sample. Additionally or alternatively, an aspherical lens can be used to focus an outgoing (compound) light beam into a fiber optic cable by which the light beam is guided to a location from where it is further processed, in particular cast towards a sample.

An embodiment of the first aspect is related to a device for illumination for a microscope,
*wherein one or more of the illumination means and*/*or the aspherical lens are configured to be detachably connected to the device.*

Thereby, the illumination device may be modular configurable. One or more illumination means may be added to the illumination device, in order to provide a tailored light beam to a probe/sample. Since probes/samples may change, different light beams may be necessary in order to effectively illuminate the probe/sample with respect to the intended illumination goal, e.g. a specific fluorophore excitation.

An embodiment of the first aspect is related to a device for illumination for a microscope,
*wherein one or more of the illumination means comprise a hybrid lens.*

A hybrid lens combines both refractive and reflective elements to efficiently shape and direct light of an illumination means. One or more refractive parts, often made of glass or plastic, bend (refract) light as it passes through, helping to focus or collimate an output beam. Meanwhile, reflective surfaces-acting like mirrors-further redirect the optical path. In other words, the refractive components adjust light by changing its direction through the lens material, while the reflective surfaces bounce light off mirrors or metalized coatings, enabling finer control over the beam's path and characteristics. A hybrid lens can be placed in front of the light source, such as, e.g., an LED. The hybrid lens is then configured to collect the rays with smaller aperture using a refractive part and the rays with bigger aperture using a reflective part.

A second aspect of the present disclosure is related to a device for illumination for a microscope,
*comprising:*
- *a fourth illumination means, M4, transmitting a fourth light beam, LB4; and one or both of:*
   - *a fifth illumination means, M5, transmitting a fifth light beam, LB5;*
   - *an aspherical lens .*

Embodiments of the second aspect may have one or more features and/or functions as described in relation to embodiments of the first aspect. In particular, the fourth and the fifth illumination means can comprise one or more LEDs and/or one or more laser diodes in order to provide a precisely configured light for illumination of a sample.

A device according to the second disclosure may be configured based on a same frame type as a device according to the first aspect. In fact first aspect device and second aspect device can be based on a single modular concept with a common frame. The frame can then be configured to either a device according to the first aspect and/or a device according to the second aspect, i.e. with a plurality of illumination means, one or more mirrors, and/or further elements, such as an aspherical lens, an adapter for a fiber optical cable, etc.

An embodiment of the second aspect is related to a device for illumination for a microscope,
*configured to:*
- *mechanically connect to a second device and*/*or to a third device according to one of the preceding aspects, such that light beams of the device and of the second device and*/*or the third device are guided in a pre-defined direction, in particular towards an aspherical lens and*/*or a fiber optic cable.*

In particular an illumination device according to the second aspect can be connected detachably to one or more illumination devices of a first aspect and/or to one or more illumination devices according to the second aspect. Thereby a multi-beams device can be assembled in order to illuminate a probe/sample.

An embodiment of the second aspect is related to a device for illumination for a microscope,
*comprising:*
- *two illumination means arranged on opposite sides of the device and such that their beams are transmitted essentially towards each other; and*
- *a mirror , configured to re-direct LB4 or LB5 such that both comprise a section that is parallel to the respective other.*

In particular the beams of the fourth illumination device and of the fifth illumination device are redirected by the one or two mirrors , which may split the incoming light depending on its spectral range, such that they are directed through an aspherical lens. In particular, the aspherical lens may be arranged such that output beams of other connected illumination devices may be guided through the aspherical lens, as well.

An embodiment of the second aspect is related to a device for illumination for a microscope,
*comprising one or more devices according to the preceding aspects; and being configured to:*
- *provide a plurality of pre-defined fluorescence light excitations for exciting a sample of a microscope.*

Such a system can comprise one or more illumination devices according to the first and/or the second aspect. Thereby, a system for illumination can be configured which is flexible for a specific microscope and/or for a specific sample or type of analysis.

An embodiment of the third aspect is related to a system for illumination, in particular microscope,
*wherein the system is attached to:*
- *an optical system of a microscope;*
- *a fiber optic cable attached to the optical system of the microscope.*

By attaching the system to and/or integrating the system into an optical system of the microscope, the illumination output of the system for illumination can be provided directly to the sample. Thereby, the system for illumination may be located such that the illumination output does not pass a zoom lens of the microscope. This enables the optical system of the microscope to remain compact.

By attaching the system to a fiber optical cable, the location of the system for illumination may be more flexible.

Alternatively, an embodiment of the system for illumination can be provided as a stand-alone-system. Such a system may be arranged to or within a microscope to illuminate a sample. Additionally or alternatively, such a system may be connected to a fiber optic cable in order to being cast to the sample. The latter may have the advantage that different systems can be attached to a microscope depending on the type of analysis and the required excitations.

An embodiment of the third aspect is related to a system for illumination, in particular microscope,
*wherein one or more illumination means are configured to emit light in a constraint fluorescence excitation bandwidth; and*
*wherein one or more illumination means are configured to emit white light.*

The light beams provided by a system for illumination may be chosen for a certain sample and/or experimental setup, e.g. a plurality of fluorescence excitations may be provided by the system for illumination in order to excite a plurality of fluorophores with which a sample to be analyzed is prepared.

A fourth aspect of the present disclosure is related to a microscope, *comprising a system for illumination according to one of the preceding aspects.*

The system for illumination can be attached to or integrated into an optical system of the microscope, in particular circumventing a zoom system of the microscope. Additionally or alternatively, the system for illumination may be attached to the optical system and/or to the sample holder of the microscope such that no illumination output has to pass through any lens of the optical system of the microscope. This allows for the optical system, in particular the zoom system, of the microscope to remain compact with no or at least little additional space for the illumination output.

Alternatively, the system for illumination may be arranged such that its illumination output is provided via a fiber optical cable to a vicinity of the probe/sample. This allows for an even more flexible arrangement of the system for illumination, e.g., in the foot or body of the microscope. However, this arrangement may come at the costs of losses due to the coupling of the illumination system's output into the fiber optical cable.

A further aspect of the present disclosure is related to a computing device comprising a processor configured to carry out a method to operate and/or configure an illumination device and/or an system for illumination according to one of the preceding aspects.

A further process of the present disclosure is related to a computer program product comprising instructions which, when the program is executed by a computer system, cause the computer system to carry out the method according to any one of the preceding aspects/embodiments.

A further aspect of the present disclosure is related to a computer-readable medium comprising instructions which, when executed by a computer system, cause the computer system to carry out the method according to any one of the preceding aspects/embodiments.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates three illumination devices according to an embodiment of this disclosure.
Fig. 2 illustrates an illumination system according to an embodiment of this disclosure.
Fig. 3 illustrates a microscope according to or for an embodiment an of this disclosure.
Fig. 4 illustrates a microscope according to or for an embodiment an of this disclosure.
Fig. 5 illustrates a microscope according to or for an embodiment an of this disclosure.

Although some aspects have been described in the context of an apparatus (or a system) in the present disclosure, the description of these aspects also represents a description of the corresponding method, where a block or device corresponds to a method step or a feature of a method step.

Analogously, aspects described in the context of a method step also represent a description of a corresponding block, item, or feature of a corresponding apparatus or of a system that may in particular be distributed over different locations and is configured to exchange information between the different locations with respective communication means.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

In the following description reference is made to the accompanying figures which form part of the disclosure, and which illustrate specific aspects in which the present disclosure can be understood. Identical reference signs refer to identical or at least functionally or structurally similar features.

### Detailed description

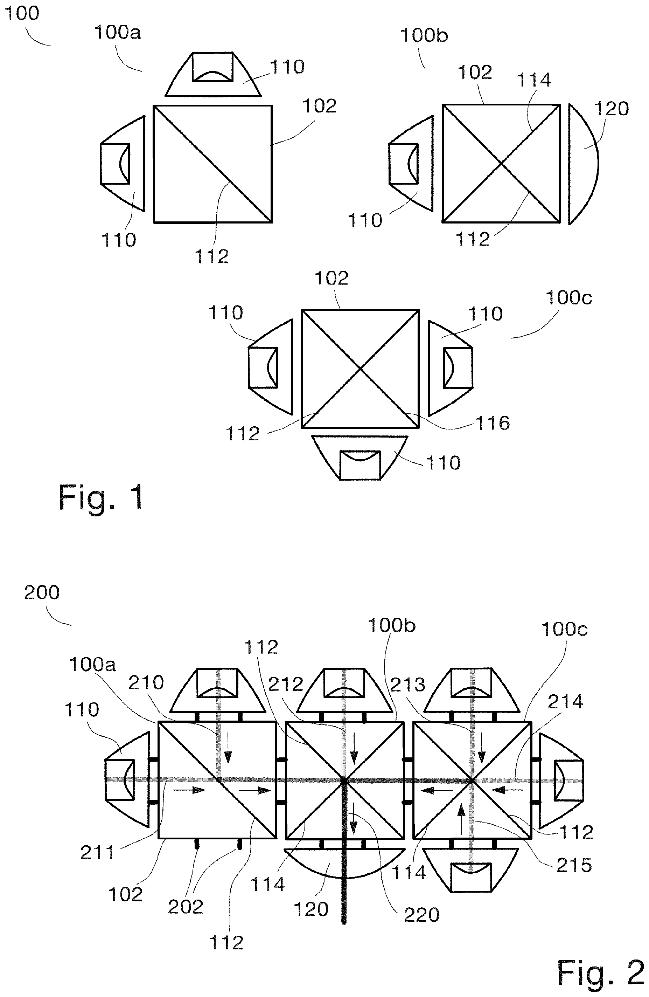

Fig. 1 illustrates three devices 100 according to an embodiment of this disclosure.

A first illumination device 100a is illustrated in the upper left. It comprises a frame 102. Attached to the frame 102 are two illumination means 110. The two illumination means can be of the same type or of different types. For example one of the illumination means can comprise an white light LED and the other illumination means can comprise a laser diode with a pre-defined spectral distribution in order to excite a pre-defined fluorophore in a sample. The two illumination devices are arranged essentially perpendicular to each other. That means that the light beams transmitted by the illumination device would cross each other in a certain point and are not parallel. In order to have both of the light beams emitting parallelly to each other, a mirror 112 is arranged within the frame. The mirror is configured to redirect one of the light beams of the illumination devices 110 such that after the redirection both light beams are parallel. Furthermore, an illumination means 110 can comprise a hybrid lens. The hybrid lens can be placed in front of the illumination element, such as, e.g., an LED. The hybrid lens collects the rays with smaller aperture using a refractive part and the rays with bigger aperture using a reflective part.

A second illumination device 100b is illustrated in the upper right. The device also comprises a frame 102, which is identical with the frame 102 of the first device 100a. Standardizing the structure facilitates plug-and-play of multiple devices and may reduce costs. The device 100b comprises a single illumination means 110. On the opposite side to the illumination means 110, the device 100b comprises an aspherical lens 120. Furthermore, withing the frame 102, the illumination means comprises two mirrors 112, 114. The mirrors are configured to redirect light that comes from illumination sources from other illumination devices connected to the illumination device 100b. This will be explained in more detail in Fig. 2.

A third illumination device 100c is illustrated in the lower part of the figure. It illustrates a cubic frame 114, as for the first illumination device 100a and the second illumination device 100b. Furthermore, the illumination device 100c comprises three illumination means 110 attached perpendicular to each other and two of them are attached on opposite sides. The illumination means 110 are detachably connected to the frame 114, such that the frame can be reconfigured in particular only by plugging different illumination means at the same positions or at other positions of the cube 100c.

The illumination devices are designed to combine rays into a common ray path. Some of the illumination devices are designed dichroitic in that way, that an illumination device combines ray paths with different spectra into one common path.

In one embodiment, three illumination devices 110a, 110b, 110c are three configurations of a modular system. The modular system as such comprises a rectangular frame 102, different types of illumination means 110, e.g. white light illumination means, illumination means with a pre-defined spectral distribution, illumination means that comprise LEDs, and/or illumination means that comprise laser diodes. Illumination means with other illumination elements are possible. Furthermore, the modular system may comprise mirrors, which can be fixed in the frame in order to change the beam direction of one or two of the illumination means of either its own illumination means or of an illumination means provided by another illumination device 100a, 100b, 100c, which is attached to the illumination device. This will be illustrated in more detail in Fig. 2.

Fig. 2 illustrates an illumination system 200 according to an embodiment of this disclosure. The illumination system 200 comprises three illumination devices with six illumination means in total. These illumination devices are configured as the illumination devices 100a, 100b, 100c explained in relation to Fig. 1. Therefore, each illumination device 100a, 100b, 100c comprises connection means to connect the one illumination means at least to one or two other illumination means. By the connection means the illumination means 100a, 100b, 100c can be detached to each other with sufficient accuracy in order that the light beams of the different illumination means 110 of the different illumination devices 100a, 100b, 100c can be guided to an output lens 120, which can be in particular an aspherical lens.

The different paths of the light beams of the different illumination means 110 are illustrated. The direction of light beam 210 of the illumination device 100a is changed by a mirror of the illumination device in order to be directed to the second illumination device 100b. The light beam 211 is passed through this mirror such that it can pass straight to the second illumination device 100b. The direction of light beam 213 of the illumination device 100c is changed by a mirror of the illumination device in order to be directed to the second illumination device 100b. Similarly, the direction of light beam 215 of the illumination device 100c is changed by a second mirror of the illumination device in order to be directed to the second illumination device 100b. The light beam 214 is passed through this mirror such that it can pass straight to the second illumination device 100b.

The illumination device 100b serves as the illumination device which collects the light beams 210, 211, 213, 214, 215 and changes their direction towards the output 120. Furthermore, the illumination device 100b also comprises one illumination means 110. The mirrors of the illumination device 100b serve to change the direction of light beams from the other illumination device 100a and 100c. At the output of the system an aspherical lens 120 can be arranged in order to focus the outgoing (compound) light beam. Further, the output beam 220 based on the single beams of the six illumination device 110 of the three illumination device 100a, 100b, 100c can be led into a fiber optic cable via an aspherical lens and/or directly used to excite a sample.

An illumination system further may comprise a controller, or an interface configured to connect the illumination system to a controller. By the controller, the illumination characteristics of one or more illumination devices and/or of an illumination system may be selected/configured. For example, which illumination means of the system should be used for providing a compound light beam. If an illumination device of the illumination system comprises one or more devices with an adjustable spectral characteristic, the parameters can also be adjustable via the controller or at least via the interface when connected to an external controller.

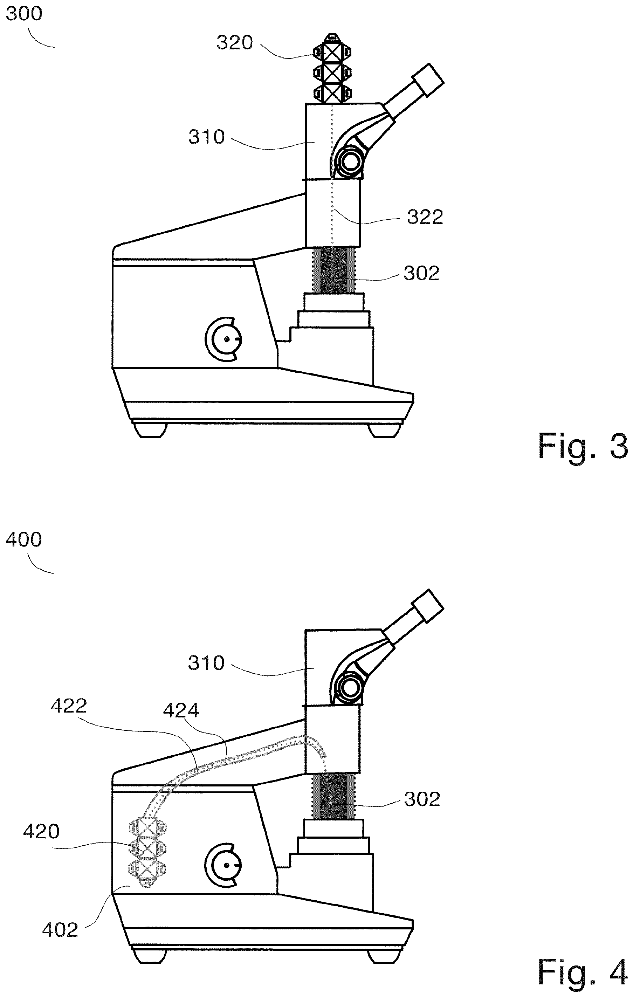

Fig. 3 illustrates a microscope 300 according to or for an embodiment of this disclosure. The microscope comprises a system for illumination, similar as the system explained in relation to Fig. 2. The illumination system 320 is attached to the microscope such that it can directly illuminate the sample. Therefore, the microscope comprises a direct light path 322 between illumination system and sample 302. In this case, the direct light path goes through the optical system 310 of the microscope. Other positions of the illumination system may be possible. For example, an illumination system can be arranged in front or after a zoom system of a microscope's optical system. Arranging an illumination device after a zoom system, may have the advantage that the optical system of the microscope can be kept compact. In particular an illumination system may be placed in front of an objective lens of a microscope. In this case, no aspherical lens for focusing the excitation light provided by the illumination system may be necessary.

Fig. 4 illustrates a microscope 400 according to or for an embodiment of this disclosure. The microscope comprises a system for illumination 420, similar as the system explained in relation to Fig. 2. The illumination system 420 is located in the foot 402 of the microscope. There it is protected from environmental influences which may help stabilizing the parameters of the device, e.g. a pre-defined spectral distributions of a light beam of an illumination means. The output beam 422 is led via a fiber optic cable 424 to the vicinity of a sample 302, where it is cast on the sample.

Places other than the foot are possible for arranging an illumination system. For example, an illumination system may be arranged at a side wall of the microscope. This may facilitate dissipation of heat generated by the illumination system. Alternatively, an illumination system may be provided as a stand-alone system, which is configured to be connected to a microscope.

Some embodiments relate to a microscope comprising a system as described in connection with one or more of the Figs. 1 to 4. Alternatively, a microscope may be part of or connected to a system as described in connection with one or more of the Figs. 1 to 4.

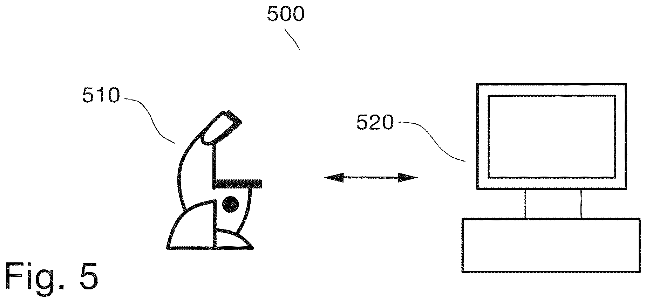

Fig. 5 shows a schematic illustration of a system 500 configured to perform a method described herein. The system 500 comprises a microscope 510 and a computer system 520. The microscope 510 is configured to take images and is connected to the computer system 520. The computer system 520 is configured to execute at least a part of a method described herein. The computer system 520 may be configured to execute a machine learning algorithm. The computer system 520 and microscope 510 may be separate entities but can also be integrated together in one common housing. The computer system 520 may be part of a central processing system of the microscope 510 and/or the computer system 520 may be part of a subcomponent of the microscope 510, such as a sensor, an actor, a camera or an illumination unit, etc. of the microscope 510.

The computer system 520 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 520 may comprise any circuit or combination of circuits. In one embodiment, the computer system 520 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 520 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 520 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 520 may also include a display device, one or more speakers, and a keyboard and/or controller, which can include a mouse, trackball, touch screen, voice-recognition device, or any other device that permits a system user to input information into and receive information from the computer system 520.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: three devices
- 100a: first illumination device
- 100b: second illumination device
- 100c: third illumination device
- 102: frame
- 110: illumination means
- 112: first mirror
- 114: second mirror
- 120: aspherical lens
- 200: illumination system
- 210: first light beam of illumination device 100a
- 211: first light beam of illumination device 100a
- 213: first light beam of illumination device 100c
- 214: third light beam of illumination device 100c
- 215: second light beam of illumination device 100c
- 220: output beam
- 300: microscope with illumination system
- 302: sample
- 310: optical system of microscope
- 320: illumination system
- 322: direct light path
- 400: microscope with illumination system
- 402: microscope foot
- 420: illumination system
- 422: output beam
- 424: fiber optic cable
- 500: system
- 510: microscope
- 520: computer system

## Claims

1. A device (100a, 100c) for illumination for a microscope,
comprising:
- a first illumination means, IM1, (110) transmitting a first light beam, LB1;
- a second illumination means, IM2, (110) transmitting a second light beam, LB2;
wherein IM1 and IM2 are fixed in relation to each other such that LB1 is transmitted non-parallelly to LB2; and
- a first mirror (112), configured to re-direct LB1 or LB2 such that it comprises a section that is essentially parallel to the respective other light beam.

2. The device according to the preceding claim,
comprising:
- a third illumination means, IM3, (110) transmitting a third light beam, LB3, wherein IM1 (110), IM2 (110), IM3 are fixed in relation to each other such that LB3 is transmitted non-parallel to LB1 or LB2; and
- a second mirror (112), configured to re-direct LB3 such that it comprises a section that is essentially parallel to LB1 or LB2.

3. The device according to one of the preceding claims,
wherein one or more of the illumination means (110) comprise one or more of:
- LEDs and;
- laser diodes.

4. The device according to one of the preceding claims,
wherein one or more illumination means (110) provide a light beam with light in a pre-defined spectral distribution, in particular for a fluorescence excitation.

5. The device according to one of the preceding claims,
configured to:
- mechanically connect to a second illumination device, in particular an illumination device according to one of the preceding claims, such that light beams of the device and of the second device and/or the third device are guided in a pre-defined direction, in particular towards one or more of:
- an aspherical lens (120);
- a fiber optic cable;
- a lens system, in particular an objective lens or a zoom lens.

6. The device according to one of the preceding claims,
comprising:
- an aspherical lens (120).

7. The device according to one of the preceding claims,
wherein one or more of the illumination means (110) and/or the aspherical lens (120) are configured to be detachably connected to the device.

8. The device according to one of the preceding claims,
wherein one or more of the illumination means (110) comprise a hybrid lens.

9. A device (110c) for illumination for a microscope,
comprising:
- a fourth illumination means, M4, (110) transmitting a fourth light beam, LB4;
and one or both of:
- a fifth illumination means, M5, transmitting a fifth light beam, LB5;
- an aspherical lens (120).

10. The device according to the preceding claims,
configured to:
- mechanically connect to a second device and/or to a third device according to one of the preceding claims, such that light beams of the device and of the second device and/or the third device are guided in a pre-defined direction, in particular towards an aspherical lens (120) and/or a fiber optic cable.

11. The device according to one of two the preceding claims,
comprising:
- two illumination means (110) arranged on opposite sides of the device and such that their beams are transmitted essentially towards each other; and
- a mirror (112), configured to re-direct LB4 or LB5 such that both comprise a section that is parallel to the respective other.

12. A system for illumination for a microscope,
comprising one or more devices (100a, 100b, 100c) according to the preceding claims; and
being configured to:
- provide a plurality of pre-defined fluorescence light excitations for exciting a sample of a microscope.

13. The system according to the preceding claim,
wherein the system is attached to:
- an optical system of a microscope;
- a fiber optic cable attached to the optical system of the microscope.

14. The system according to one or the preceding claims,
wherein one or more illumination means (110) are configured to emit light in a constraint fluorescence excitation bandwidth; and
wherein one or more illumination means (110) are configured to emit white light.

15. A microscope
comprising a system for illumination according to one of the preceding claims.
